(19) Europäisches Patentamt
European Patent Office
Office européen des brevets

(11) **EP 3 051 487 A1**

(12) **EUROPEAN PATENT APPLICATION**

(43) Date of publication:
**03.08.2016 Bulletin 2016/31**

(51) Int Cl.:
***G06T 5/00*** *(2006.01)*

(21) Application number: **15305113.1**

(22) Date of filing: **30.01.2015**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Thomson Licensing**
**92130 Issy-les-Moulineaux (FR)**

(72) Inventors:
• **Lasserre, Sébastien**
**35576 Cesson-Sévigné (FR)**

• **Leleannec, Fabrice**
**35576 Cesson-Sévigné (FR)**
• **Lopez, Patrick**
**35576 Cesson-Sévigné (FR)**

(74) Representative: **Huchet, Anne**
**Technicolor**
**1, rue Jeanne d'Arc**
**92443 Issy-les-Moulineaux Cedex (FR)**

(54) **Method and device for mapping a HDR picture to a SDR picture and corresponding SDR to HDR mapping method and device**

(57) A method is disclosed that comprises mapping a high-dynamic range luminance picture to a standard-dynamic range luminance picture based on a backlight value $Ba_c$ associated with the high-dynamic range luminance picture.

Figure 1

**Description**

1. TECHNICAL FIELD

In the following, a method and a device for mapping a HDR picture to a SDR picture are disclosed. Corresponding SDR to HDR mapping method and device are also disclosed.

2. BACKGROUND ART

Standard-Dynamic-Range pictures (SDR pictures) are color pictures whose luminance values are represented with a limited dynamic usually measured in power of two (f-stops). SDR pictures have a dynamic of around 10 f-stops, i.e. a ratio of 1000 between the brightest pixels and the darkest pixels in the linear domain. Such SDR pictures are coded with a limited number of bits (most often 8 or 10 in HD and UHD TV) in a non-linear domain. In High-Dynamic-Range pictures (HDR pictures), the signal dynamic is much higher (up to 20 f-stops, a ratio of one million between the brightest pixels and the darkest pixels). In HDR pictures, raw data are usually represented in floating-point format (either 32-bit or 16-bit for each component, namely float or half-float), the most popular format being openEXR half-float format (16-bit per RGB component, i.e. 48 bits per pixel) or in integers with a long representation, typically at least 16 bits.

Broadcasting simultaneously the HDR picture(s) and the SDR picture(s) (i.e. simulcasting) is a way to distribute the HDR content while being backward compatible with existing legacy SDR displays. However, this solution requires to double the bandwidth compared to the old infrastructures distributing only SDR pictures.

In order to decrease the required bandwidth, it is known to reduce the dynamic range of the HDR picture before its coding. Such solution makes it possible to encode the HDR picture after dynamic range reduction with a legacy encoder (i.e. an encoder initially configured to encode SDR pictures). An HEVC main10 encoder is an example of such a legacy encoder. It is known to apply a non-linear mapping function on the HDR picture to reduce its dynamic range to 10 bits. The so-called PQ OETF proposed by Dolby (standard SMPTE 2084) is an example of such a mapping function. However, the HDR picture after dynamic range reduction is usually not viewable as an SDR picture. In addition, the compression of such reduced HDR pictures has usually poor performance.

3. BRIEF SUMMARY

A method is disclosed that comprises mapping a high-dynamic range luminance picture to a standard-dynamic range luminance picture based on a backlight value $Ba_c$ associated with the high-dynamic range luminance picture.

This method makes it possible reduce the dynamic range of a HDR picture before its coding while ensuring that the HDR picture after dynamic range reduction is a SDR picture of good quality that can be displayed on legacy SDR displays. In particular the overall perceived brightness (i.e. dark vs. bright scenes) is preserved.

A device is further disclosed that comprises at least a processor configured to map a high-dynamic range luminance picture to a standard-dynamic range luminance picture based on a backlight value associated with the high-dynamic range luminance picture.

Advantageously, this device belongs to a set comprising:

- a mobile device ;
- a communication device ;
- a game device ;
- a tablet (or tablet computer) ;
- a laptop ;
- a still picture camera;
- a video camera ;
- an encoding chip;
- a still picture server; and
- a video server (e.g. a broadcast server, a video-on-demand server or a web server).

In a first embodiment, mapping the high-dynamic range luminance picture to a standard-dynamic range luminance picture based on a backlight value associated with the high-dynamic range luminance picture comprises determining a mapping function from a set of at least two mapping functions based on the backlight value and mapping the high-dynamic range luminance picture to a standard-dynamic range luminance picture using the determined mapping function, wherein each mapping function of the set is associated with a different backlight value.

Advantageously, determining a mapping function from a set of at least two mapping functions based on the decoded backlight value comprises interpolating or extrapolating the mapping function from at least two mapping functions of the set of at least two mapping functions.

In an exemplary embodiment, each mapping function of the set is an increasing function in luminance and the set of mapping functions is a decreasing function of the backlight value for each luminance value.

According to a specific characteristic, each function $g(Ba_i, Y)$ of the set is defined as $f(Y/Ba_i)/N(Ba_i)$ where $N(Ba_i) = f(P_{HDR}/Ba_i)/M_{SDR}$ with $P_{HDR}$ being a high-dynamic range peak brightness and $M_{SDR}$ being a maximum codeword value of the standard-dynamic range luminance picture and where $f(z) = \exp \int \zeta(z)/z$ and $\zeta(z)$ is a decreasing function.

In a second embodiment, mapping a high-dynamic range luminance picture to a standard-dynamic range luminance picture based on the backlight value comprises:

- dividing the high-dynamic range luminance picture by $Ba_c$;
- applying a mapping function f(.) on the divided high-dynamic range luminance picture;
- dividing the mapped high-dynamic range luminance picture by $N(Ba_c)$;

wherein $f(z) = \exp \int \zeta(z)/z$ and $\zeta(z)$ is a decreasing function and where $N(Ba_c) = f(P_{HDR}/Ba_c)/M_{SDR}$ with $P_{HDR}$ being a high-dynamic range peak brightness and $M_{SDR}$ being a maximum codeword value of the standard-dynamic range luminance picture.

In an exemplary embodiment, f(z) is the function $a*\ln(b+z) + c$, with a, b and c are constant values such that f(0)=0.

Advantageously, a is close to 0.45, b is close to 0.12, and c is close to 0.95.

Advantageously, the high-dynamic range luminance picture is obtained from a source belonging to a set comprising:

- a local memory;
- a storage interface,
- a communication interface; and
- a picture capturing circuit.

Advantageously, the standard-dynamic range luminance picture is sent to a destination belonging to a set comprising:

- a local memory;
- a storage interface,
- a communication interface, and
- a display device.

A method is also disclosed that comprises mapping a standard-dynamic range luminance picture to a high-dynamic range luminance picture based on a backlight value associated with the high-dynamic range luminance picture.

A device is also disclosed that comprises at least a processor configured to map a standard-dynamic range luminance picture to a high-dynamic range luminance picture based on a backlight value associated with the high-dynamic range luminance picture. Advantageously, this device belongs to a set comprising:

- a mobile device;
- a communication device;
- a game device;
- a set top box;
- a TV set;
- a tablet (or tablet computer);
- a laptop;
- a display and
- a decoding chip.

In a first embodiment, mapping the standard-dynamic range luminance picture to a high-dynamic range luminance picture depending on the decoded backlight value comprises determining a mapping function from a set of at least two mapping functions based on the decoded backlight value and mapping the standard-dynamic range luminance picture to a high-dynamic range luminance picture using the determined mapping function, wherein each mapping function of the set is associated with a different backlight value.

Advantageously, determining a mapping function from a set of at least two mapping functions based on the decoded backlight value comprises interpolating or extrapolating the mapping function from at least two mapping functions of the set of at least two mapping functions.

In an exemplary embodiment, each mapping function of the set is an increasing function in luminance and the set of mapping functions is an increasing function of the backlight value for each luminance value.

According to a specific characteristic, each function $g^{-1}(Ba_i, L)$ of the set is defined as $Ba_i*f^{-1}(L*N(Ba_i))$ where $N(Ba_i) = f(P_{HDR}/Ba_i)/ M_{SDR}$ with $P_{HDR}$ being a high-dynamic range peak brightness and $M_{SDR}$ being a maximum codeword value of the standard-dynamic range luminance picture and where $f(z) = \exp \int \zeta(z)/z$ and $\zeta(z)$ is a decreasing function.

In second embodiment, mapping a standard-dynamic range luminance picture to a high-dynamic range luminance picture based on the backlight value $Ba_c$ comprises :

- multiplying the standard-dynamic range luminance picture by $N(Ba_c)$;
- applying a mapping function $f^{-1}(.)$ on the multiplied standard-dynamic range luminance picture;
- multiplying the mapped standard-dynamic range luminance picture by the backlight value $Ba_c$;

where $f(z) = \exp \int \zeta(z)/z$ and $\zeta(z)$ is a decreasing function and where $N(Ba_c) = f(P_{HDR}/ Ba_c)/ M_{SDR}$ with $P_{HDR}$ being a high-dynamic range peak brightness and $M_{SDR}$ being a maximum codeword value of the standard-dynamic range picture.

In an exemplary embodiment, the function $f^{-1}(.)$ is the function $\exp((x-c)/a)-b$, with a, b and c are constant values such that $f^{-1}(0)=0$.

Advantageously, a is close to 0.45, b is close to 0.12, and c is close to 0.95.

Advantageously, the standard-dynamic range luminance picture is obtained from a source belonging to a set comprising:

- a local memory;
- a storage interface,
- a communication interface; and
- a picture capturing circuit.

Advantageously, the high-dynamic range luminance picture is sent to a destination belonging to a set comprising:

- a local memory;
- a storage interface,
- a communication interface; and
- a display device.

4. BRIEF SUMMARY OF THE DRAWINGS

- Figure 1 shows examples of HDR to SRD mapping functions;
- Figures 2, 3 and 4 represent flowcharts of a method for mapping a HDR luminance picture in a SDR luminance picture according to specific and non-limiting embodiments;
- Figure 5 represents an exemplary architecture of a HDR to SDR mapping device configured to map a HDR luminance picture in a SDR luminance picture according to an exemplary and non-limiting embodiment;
- Figures 6, 7 and 8 represent flowcharts of a method for mapping a SDR luminance picture in a HDR luminance picture according to specific and non-limiting embodiments;
- Figure 9 represents an exemplary architecture of a SDR to HDR mapping device configured to map a SDR luminance picture in a HDR luminance picture according to an exemplary and non-limiting embodiment;
- Figure 10 represents an exemplary encoding device that implements one of the HDR to SDR mapping methods disclosed with respect to figures 2, 3 and 4; and
- Figure 11 represents an exemplary decoding device that implements one of the SDR to HDR mapping methods disclosed with respect to figures 6, 7 and 8.

5. DETAILED DESCRIPTION

A HDR picture usually comprises at least one luminance (or luma) component and possibly chrominance (or chroma) components. In the following the luminance component of the HDR picture is called HDR luminance picture. The HDR luminance picture may be obtained from a HDR picture represented as an RGB picture. In this case, the luminance component $Y_{HDR}$ of the HDR picture may be obtained by a linear combination of the RGB components. The linear combination is defined by ITU-T BT.709 or BT.2020 recommendations. Other formats than RGB may also be used to obtain the HDR luminance picture. Reducing the dynamic range of a HDR picture usually comprises reducing the dynamic range of its luminance component. This requires the definition of mapping functions. The known mapping functions such as PQ OETF proposed by Dolby are defined exclusively. They are thus not adapted to the content.

**Mapping functions definition**

In an embodiment, a set S of N (at least two) mapping functions $\{g(Ba,.)\}_{Ba}$ is defined where each mapping function is associated with a different backlight value Ba. A backlight value is usually associated with an HDR picture and is representative of the average brightness of the HDR picture. Here, the term backlight is used by analogy with TV sets made of a color panel, like a LCD panel for instance, and a rear illumination apparatus, like a LED array for instance. The rear apparatus, usually generating white light, is used to illuminate the color panel to provide more brightness to the TV. As a consequence, the luminance of the TV is the product of the luminance of rear illuminator and of the luminance of the color panel. This rear illuminator is often called "backlight" and its intensity is somewhat representative of the average brightness of the overall scene.

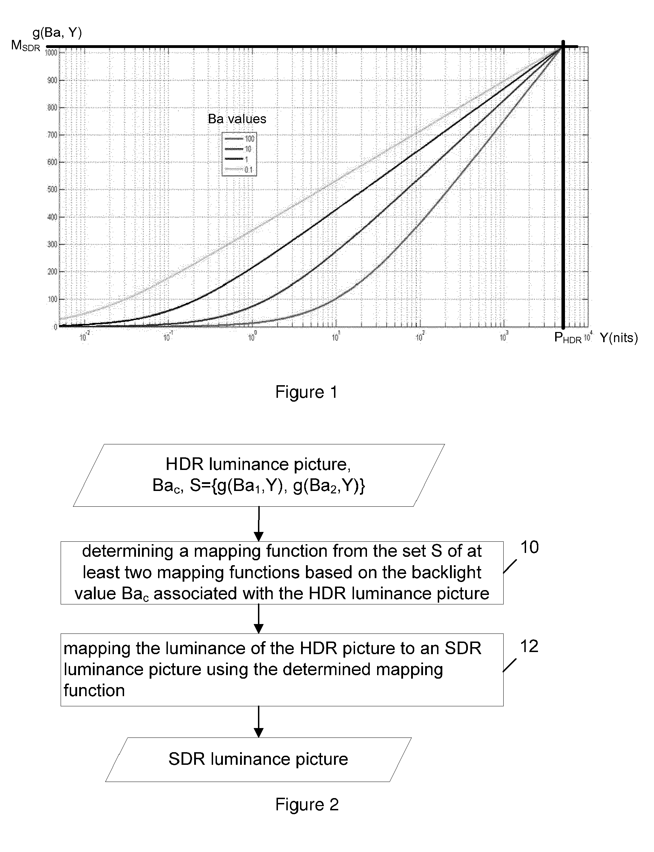

**Figure 1** shows examples of such mapping functions g(Ba,.): $Y \rightarrow g(Ba,Y)=L$, where L is a SDR luminance value. Each mapping function is increasing in the second variable Y and the mapping functions are decreasing in Ba, i.e. for a fixed Y value, the smaller Ba the higher g(Ba,Y). This is true for all values Y. Several HDR luminance values Y can correspond to a unique SDR luminance value $L_{SDR}$ depending on the value Ba as shown by figure 1. In the linear luminance domain, Y is typically measured in nits. One nit corresponds physically to a light intensity of one candela per square meter.

A peak brightness $P_{HDR}$ is provided from the HDR workflow. $P_{HDR}$ is thus the maximum brightness (say a thousand nits for instance) of a pixel allowed by the HDR format. In order to keep the relative brightness consistency between scenes, i.e. the SDR mapping of dark HDR scenes should look darker than the SDR mapping of brighter HDR scenes, this peak brightness $P_{HDR}$ is mapped to the maximum SDR codeword value $M_{SDR}$ (=1023 in a 10-bit workflow) of the SDR workflow. This has to be done independently of the scene content (, i.e. for all Ba values). The mapping functions are thus defined such that $g(Ba, P_{HDR}) = M_{SDR}$ for all possible values for the backlight Ba.

The peak brightness $P_{HDR}$ being fixed, darker HDR pictures lead to lower backlight values and require a curve g(Ba, .) capable of coding a bigger range of luminance. Basically, the range is $[B, P_{HDR}]$ where B is the luminance level (in nits) of the darkest part of the picture. Darker pictures lead to smaller B, thus to bigger range.

Since the curve g(Ba, .) maps $[B, P_{HDR}]$ on $[0, M_{SDR}]$ (1023 in case of a 10 bit workflow), its average steepness (i.e. its derivative) decreases as B decreases, thus as Ba decreases. Since the curves g(Ba, .) start from the same brightest point $(P_{HDR}, M_{SDR})$, g(., Y) is decreasing in Ba as shown below. For a fixed Y, one gets

$$Ba_1 < Ba_2 \Leftrightarrow \text{scene 1 darker than scene 2}$$

$$\Rightarrow g(Ba_1, .) \text{ range is bigger than } g(Ba_2, .) \text{ range}$$

$$\Rightarrow g(Ba_1, .) \text{ derivative is smaller than } g(Ba_2, .) \text{ derivative}$$

$$\Rightarrow g(Ba_1, .) > g(Ba_2, .) \text{ because } g(Ba_1, P_{HDR}) = g(Ba_2\, P_{HDR}) = M_{SDR}.$$

As a consequence, g(Ba, Y) is a decreasing function of Ba, for all Y. In a specific embodiment the mapping functions $\{g(Ba,.)\}_{Ba}$ are defined as follows:

$$g(Ba, Y) = M_{SDR}\, f(Y/Ba)/f(P_{HDR}/Ba) = f(Y/Ba)/N(Ba),$$

where N(Ba) is a normalization term depending on Ba, namely

$$N(Ba) = f(P_{HDR}/Ba)/ M_{SDR}.$$

In the case where f is an increasing function, the function g is also an increasing function in Y for any Ba. However, not all functions f lead to a function g that is decreasing in Ba.

Here, a criterion is provided to determine whether or not g has this decreasing property relatively to Ba. First, Y is fixed and a new variable $z= P_{HDR}/Ba \geq 0$ is defined. Consequently, the function $\psi$ defined by

$$\psi(z) = g(z,Y) = f(Yz/ P_{HDR})/f(z)$$

must be an increasing function in z. One notes that the constant $M_{SDR}>0$ has been dropped because it plays no role in the monotonicity. Second, $\alpha$ is defined as $Y/P_{HDR}$ such that $0\leq\alpha\leq1$. By taking the logarithm of the above expression, one obtains

$$\ln \psi(z) = \ln f(\alpha z) - \ln f(z)$$

that must be an increasing function for all $0\leq\alpha\leq1$. Supposing enough regularity on f to allow taking the derivative, this derivative must be positive to ensure the increasing property. One further obtains

$$(\ln \psi)'(z)\geq0$$

with

$$(\ln \psi)'(z)= \alpha(\ln f)'(\alpha z) - (\ln f)'(z) =: \alpha h(\alpha z) - h(z)$$

where h is defined as the function $(\ln f)'$. By writing $h(z) = \zeta(z)/z$, i.e. $\zeta$ is defined as the product $zh(z)$, one gets

$$0 \leq \alpha h(\alpha z) - h(z) = \alpha\zeta(\alpha z)/\alpha z - \zeta(z)/z \quad \Leftrightarrow \quad 0 \leq \zeta(\alpha z) - \zeta(z).$$

The last inequality should hold for any $0\leq\alpha\leq1$. Taking into account that z is positive, this is equivalent to state that $\zeta(z)$ is a decreasing function. The criterion becomes simply

$$\zeta(z) = zh(z) = z (\ln f)'(z) \text{ is a decreasing function.}$$

Many functions qualify as it suffices to take any decreasing $\zeta(z)$ and set

$$f(z) = \exp \int \zeta(z)/z$$

As example, with a constant function $\zeta(z)=\gamma$, one gets $f(z) = \exp(\gamma\ln(z))=z^{\gamma}$. Another example is $\zeta(z)=-adz^{\alpha}$ ($\alpha>1$) leading to $f(z) = \exp(dz^{\alpha})$, where d is a constant.

In a preferred embodiment, f is a Slog function defined by

$$f(z) = Slog(z) = a*\ln(b+z) + c$$

with the condition $f(0)=0$ and $a,b\geq0$. The condition at the origin $(0,0)$ leads to $f(z)$ being independent of c and equal to $a\ln(1+z/b)$. The criterion is fulfilled as shown below:

$$\zeta(z) = z (\ln f)'(z)= zf'(z)/f(z) = z/a(b+z)\ln(1+z/b).$$

The change of variable $z'=z/b$ gives $\zeta(z) = z'/a(1+z')\ln(1+z')$. This function is decreasing in z' independently on $a>0$ or $b>0$ that has been absorbed by z'. This is easily proved by the direct analysis of the function: $z' \rightarrow z'/a(1+z')\ln(1+z')$. So, all Slog functions, as defined above for any triplet (a,b,c) with $a,b>0$ and $f(0)=0$, do qualify for the decreasing property in Ba. These functions are as shown on the figure 1 for a peak $P_{HDR}=5000$ nits and a mapping on 10 bits, i.e. $M_{SDR}=1023$.
The parameters a, b, c of the Slog function f are determined such that

• f(0) = 0,

- f(1) = 1,
- and the derivative in 1 is the same as a gamma function: f'(1) = $\gamma$.

A gamma function is defined by h :x -> $x^\gamma$. The three parameters a, b, c may be defined as functions of $\gamma$, i.e. $a(\gamma)$, $b(\gamma)$ and $c(\gamma)$.Typical values are shown in Table 1.

**Table 1**

| $\gamma$ | a | b | c |
|---|---|---|---|
| 1/2.0 | 0.6275 | 0.2550 | 0.8575 |
| 1/2.4 | 0.4742 | 0.1382 | 0.9386 |
| 1/2.8 | 0.3861 | 0.0811 | 0.9699 |

In an advantageous embodiment, a value of $\gamma$ close to 2.5 is efficient in terms of HDR compression performance as well as good viewability of the obtained SDR luma. Thus, the 3 parameters may advantageously take the following values: a = 0.44955114, b = 0.12123691, c = 0.94855684. In a specific embodiment, a is close to 0.45, i.e. $|a-0.45|<\varepsilon 1$, b is close to 0.12, i.e. $|b-0.12|<\varepsilon 2$, c is close to 0.95, i.e. $|c-0.95|<E3$ where $\varepsilon 1$, $\varepsilon 2$ and $\varepsilon 3$ are constant values, e.g. equal to $10^{-1}$ or $10^{-2}$. Other values may be used.

The function f(.) and g(Ba,.) may advantageously be defined in the form of Look-Up Tables for a set of discrete Y values and Ba values. The set of mapping functions is advantageously defined off-line and then used by an encoder and a decoder. The values of $P_{HDR}$ and $M_{SDR}$ are known from the HDR and SRD workflows respectively. They may, for example, be provided by the system layer.

The inverse functions $f^{-1}()$ and $g^{-1}(Ba,.)$: $L \rightarrow g^{-1}(Ba,L)=Y$ may be defined. The set S' comprises the inverse functions $\{g^{-1}(Ba,.)\}_{Ba}$. Each mapping function $g^{-1}(Ba,.)$ is increasing in the second variable L and the mapping functions are increasing in Ba, i.e. for a fixed Y value, the higher Ba the higher $g^{-1}(Ba,L)$. This is true for all values Y.

In the case where f(z) = aln(b+z) + c, then $f^{-1}(z)=\exp((x-c)/a)-b$. The function $f^{-1}(.)$ and $g^{-1}(Ba,.)$ may advantageously be defined in the form of Look-Up Tables for a set of discrete L values and Ba values.

## HDR to SDR mapping

In the following, the methods disclosed for a picture may be applied on a sequence of pictures, e.g. a video.

According to various embodiments, the HDR luminance picture is mapped to a SDR luminance picture based on a backlight value Ba associated with the HDR luminance picture. Thus the mapping from HDR to SDR is adapted to the content. There are different ways of obtaining the backlight value associated with the HDR picture. For example, the backlight value is the mean luminance value of the HDR luminance picture. In a variant, the backlight value may be obtained in a non-linear domain to avoid the effect of extreme luminance values, particularly very bright pixels close to the peak luminance. Thus, Ba may be the mean over the whole picture of log(Y) or of $Y^\alpha$ for $\alpha<1$, where Y is the linear luminance value for one pixel. It will be appreciated, however, that the present principles are not restricted to any specific method for obtaining a backlight value.

**Figure 2** represents a flowchart of a method for mapping a HDR luminance picture in a SDR luminance picture according to a specific and non-limiting embodiment. A backlight value $Ba_c$ is associated with the HDR picture. Advantageously the method is used in an encoder configured to encode a HDR picture.

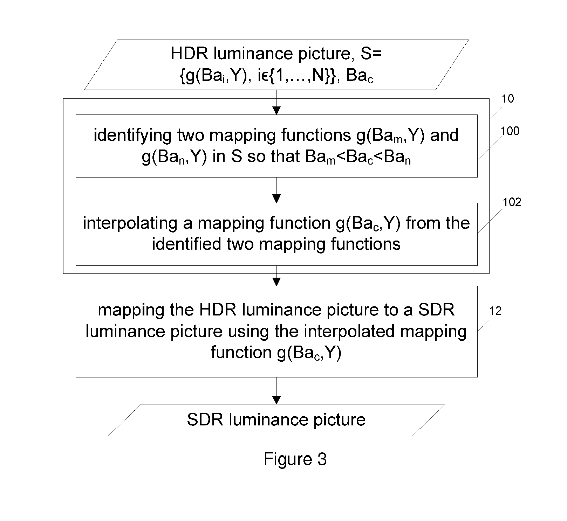

In step 10, a mapping function $g(Ba_c,.)$ is determined from a set S of at least two mapping functions defined off-line as indicated previously. The set S comprises at least two mapping functions g(Ba1,.) and g(Ba2,.) defined for two different backlight values. In the case where $Ba_c$ equals one the backlight values associated with a mapping function of the set S, then this mapping function is the mapping function used in the next step 12. In the case where $Ba_c$ is different from all the backlight values of the mapping functions of the set S, then the mapping function $g(Ba_c,.)$ is interpolated as shown on **figure 3**. In a step 100, the two mapping functions of S, $g(Ba_m,.)$ and $g(Ba_n,.)$ such that $Ba_m < Ba_c < Ba_n$ are identified. In a step 102, $g(Ba_c,.)$ is interpolated from $g(Ba_m,.)$ and $g(Ba_n,.)$. In the case where the mapping functions are defined as Look-Up Tables, then for each value Yi in the look-up table, $g(Ba_c,Yi) = \lambda g(Ba_m, Yi) + (1-\lambda) g(Ba_n,Yi)$, where $\lambda=(Ba_c- Ban)/(Bam- Ban)$. In the case where $Ba_c$ is higher (respectively lower) than all Ba values associated with mapping functions in S, then $g(Ba_c,.)$ is extrapolated from two mapping functions of S, e.g. the two mapping functions of S associated with the two highest (respectively lowest) Ba values.

In step 12, the HDR luminance picture is mapped to a SDR luminance picture using the determined mapping function $g(Ba_c,.)$. Each pixel L of the SDR luminance picture is set equal to $g(Ba_c,Y)$, where Y is the spatially corresponding pixel (co-located pixel) in the HDR picture. In the case where the determined mapping function $g(Ba_c,.)$ is represented as a LUT, HDR to SDR mapping may comprise interpolation. Indeed, $g(Ba_c,Y)$ may be interpolated from values of the LUT, e.g. from $g(Ba_c,Y_i)$ and $g(Ba_c,Y_j)$, where $Y_i \leq Y \leq Y_j$.

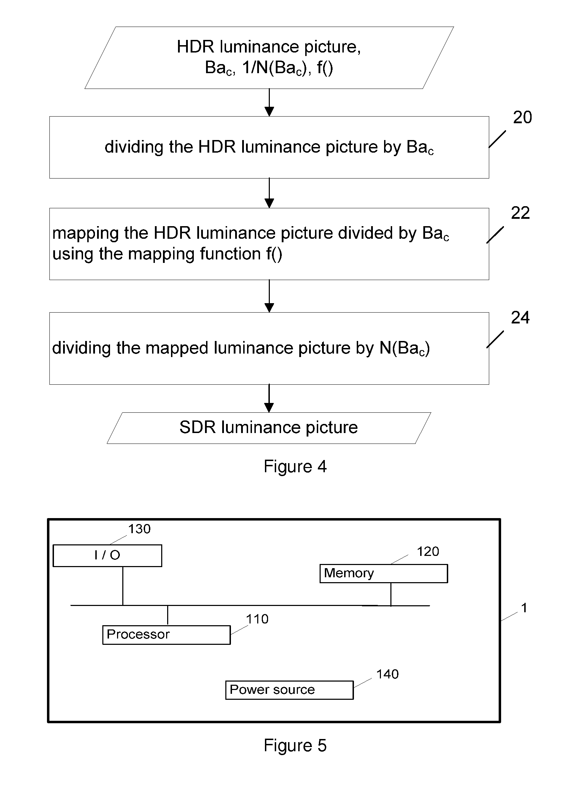

**Figure 4** represents a flowchart of a method for mapping a HDR luminance picture in a SDR luminance picture according to another specific and non-limiting embodiment.

In step 20, the HDR luminance picture is divided by $Ba_c$. Specifically, each pixel value is divided by $Ba_c$.

In step 22, the mapping function f(.) is applied on the divided HDR luminance picture. f() is a known function defined off-line as indicated previously. In a specific embodiment f() is defined as a 1D LUT. In another specific embodiment, the function f() is defined as a Slog function $a\ln(b+z) + c$ where a, b and c are constant values. Advantageously, a = 0.44955114, b = 0.12123691, c = 0.94855684. In a specific embodiment, a is close to 0.45, i.e. $|a-0.45|<\varepsilon 1$, b is close to 0.12, i.e. $|b-0.12|<\varepsilon 2$, c is close to 0.95, i.e. $|c-0.95|<\varepsilon 3$ where $\varepsilon 1$, $\varepsilon 2$ and $\varepsilon 3$ are constant values, e.g. equal to $10^{-1}$ or $10^{-2}$. Other values may be used.

The Slog function f() may also be defined in the form of a 1 D LUT.

In step 24, the mapped HDR luminance picture is divided by $N(Ba_c)$. The obtained luminance picture is the SDR luminance picture. $N(Ba_c) = f(P_{HDR}/Ba_c)/M_{SDR}$ with $P_{HDR}$ being a HDR peak brightness and $M_{SDR}$ being a maximum codeword value. When the reduced dynamic range is p bits then $M_{SDR} = 2^p-1$. When p=10 bits, then $M_{SDR} = 1023$.

The SDR luminance picture may advantageously be encoded in a bitstream. The backlight value $Ba_c$ and possibly $N(Ba_c)$ may also be encoded in addition to the SDR luminance picture. Additional information on the chroma may also be encoded.

**Figure 5** represents an exemplary architecture of a HDR to SDR mapping device 1 configured to map a HDR luminance picture in a SDR luminance picture according to an exemplary and non-limiting embodiment.

The mapping device 1 comprises one or more processor(s) 110, which could comprise, for example, a CPU, a GPU and/or a DSP (English acronym of Digital Signal Processor), along with internal memory 120 (e.g. RAM, ROM, and/or EPROM). The mapping device 1 comprises one or more Input/Output interface(s) 130, each adapted to display output information and/or allow a user to enter commands and/or data (e.g. a keyboard, a mouse, a touchpad, a webcam); and a power source 140 which may be external to the mapping device 1. The mapping device 1 may also comprise one or more network interface(s) (not shown). The HDR luminance picture may be obtained from a source. According to different embodiments, the source can be, but is not limited to:

- a local memory, e.g. a video memory, a RAM, a flash memory, a hard disk ;
- a storage interface, e.g. an interface with a mass storage, a ROM, an optical disc or a magnetic support;
- a communication interface, e.g. a wireline interface (for example a bus interface, a wide area network interface, a local area network interface) or a wireless interface (such as a IEEE 802.11 interface or a Bluetooth interface); and
- an picture capturing circuit (e.g. a sensor such as, for example, a CCD (or Charge-Coupled Device) or CMOS (or Complementary Metal-Oxide-Semiconductor)).

According to different embodiments, the SDR luminance picture may be sent to a destination. As an example, the SDR luminance picture is stored in a remote or in a local memory, e.g. a video memory or a RAM, a hard disk. In a variant, the SDR luminance picture is sent to a storage interface, e.g. an interface with a mass storage, a ROM, a flash memory, an optical disc or a magnetic support and/or transmitted over a communication interface, e.g. an interface to a point to point link, a communication bus, a point to multipoint link or a broadcast network.

According to an exemplary and non-limiting embodiment, the mapping device 1 further comprises a computer program stored in the memory 120. The computer program comprises instructions which, when executed by the mapping device 1, in particular by the processor 110, enable the mapping device 1 to execute the method described with reference to figures 2, 3 or 4. According to a variant, the computer program is stored externally to the mapping device 1 on a non-transitory digital data support, e.g. on an external storage medium such as a HDD, CD-ROM, DVD, a read-only and/or DVD drive and/or a DVD Read/Write drive, all known in the art. The mapping device 1 thus comprises a mechanism to read the computer program. Further, the mapping device 1 could access one or more Universal Serial Bus (USB)-type storage devices (e.g., "memory sticks.") through corresponding USB ports (not shown).

According to exemplary and non-limiting embodiments, the mapping device 1 can be, but is not limited to:

- a mobile device ;
- a communication device ;
- a game device ;
- a tablet (or tablet computer) ;
- a laptop ;
- a still picture camera;
- a video camera ;
- an encoding chip;

- a still picture server; and

- a video server (e.g. a broadcast server, a video-on-demand server or a web server).

The mapping device 1 is advantageously part of an encoder configured to encode a SDR picture in a bitstream.

**SDR to HDR mapping**

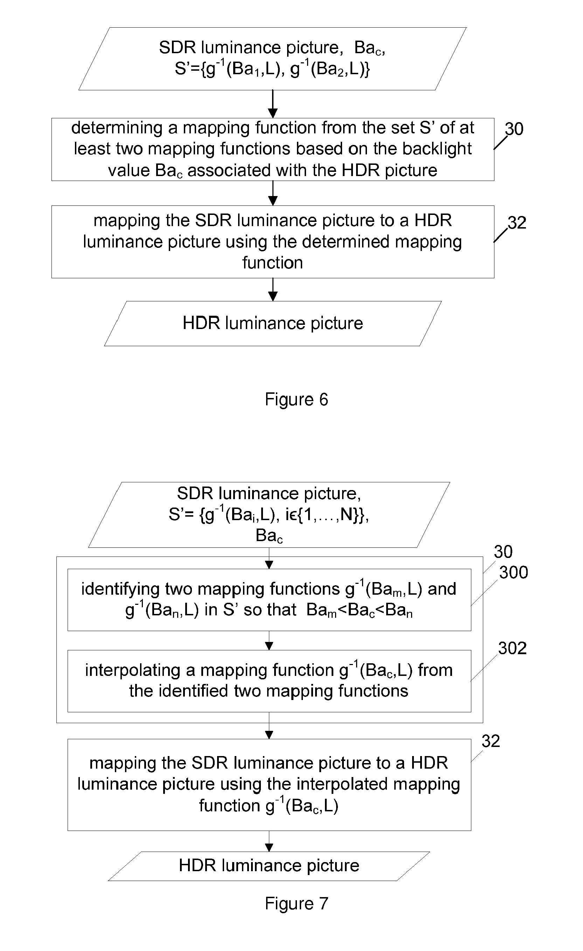

**Figure 6** represents a flowchart of a method for mapping a SDR luminance picture in a HDR luminance picture according to a specific and non-limiting embodiment. Advantageously the method is used in a decoder configured to decode a HDR picture.

In step 30, a mapping function $g^{-1}(Ba_c,.)$ is determined from the set S' of at least two mapping functions defined off-line as indicated previously. The set S' comprises at least two mapping functions $g^{-1}(Ba1,.)$ and $g^{-1}(Ba2,.)$ defined for two different backlight values. In the case where $Ba_c$ equals one the backlight values associated with a mapping function of the set S', then this mapping function is the mapping function used in the next step 32. In the case where $Ba_c$ is different from all the backlight values of the mapping functions of the set S', then the mapping function $g^{-1}(Ba_c,.)$ is interpolated as shown on **figure 7.** In a step 300, the two mapping functions of S', $g^{-1}(Ba_m,.)$ and $g^{-1}(Ba_n,.)$,such that $Ba_m < Ba_c < Ba_n$ are identified. In a step 302, $g(Ba_c,.)$ is interpolated from $g^{-1}(Ba_m,.)$ and $g^{-1}(Ba_n,.)$. In the case where the mapping functions are defined as Look-Up tables, then for each value Li in the look-up table, $g^{-1}(Ba_c,Li) = \lambda\, g^{-1}(Ba_m,Li) + (1-\lambda)\, g^{-1}(Ba_n,Li)$, where $\lambda=(Ba_c- Ban)/(Ba_m-Ba_n)$. In the case where $Ba_c$ is higher (respectively lower) than all Ba values associated with mapping functions in S', then $g^{-1}(Ba_c,.)$ is extrapolated from two mapping functions of S', e.g. the two mapping functions of S associated with the two highest (respectively lowest) Ba values.

In step 32, the SDR luminance picture is mapped to a HDR luminance picture using the determined mapping function $g^{-1}(Ba_c,.)$. Each pixel Y of the HDR luminance picture is set equal to $g^{-1}(Ba_c, L)$, where L is the spatially corresponding pixel (co-located pixel) in the SDR picture. In the case where the determined mapping function $g^{-1}(Ba_c,.)$ is represented as a LUT, SDR to HDR mapping may comprise interpolation. Indeed, $g^{-1}(Ba_c,L)$ may be interpolated from values of the LUT, e.g. from $g^{-1}(Ba_c,L_i)$ and $g^{-1}(Ba_c,L_j)$, where $L_i \le L \le L_j$.

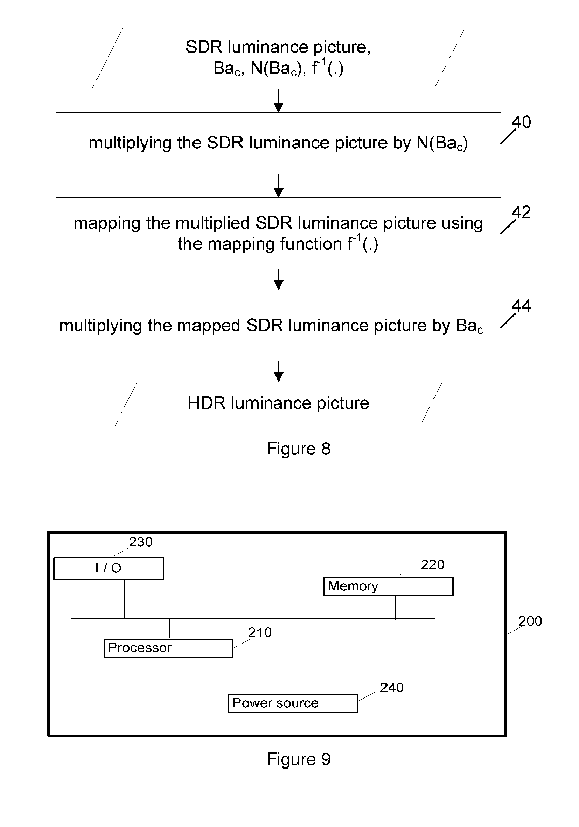

**Figure 8** represents a flowchart of a method for mapping a SDR luminance picture in a HDR luminance picture according to another specific and non-limiting embodiment. Advantageously the method is used in an encoder configured to encode a HDR picture.

In step 40, the SDR luminance picture is multiplied by $N(Ba_c)$. Specifically, each pixel value L is multiplied by $N(Ba_c)$, wherein $N(Ba_c) = f(P_{HDR}/ Ba_c)/ M_{SDR}$ with $P_{HDR}$ is a HDR peak brightness and $M_{SDR}$ is a maximum codeword value. When the reduced dynamic range is p bits then $M_{SDR} = 2^p-1$. When p=10 bits, then $M_{SDR} =1023$.

In step 42, the mapping function $f^{-1}(.)$ is applied on the multiplied SDR luminance picture. $f^{-1}()$ is a known function defined off-line as indicated previously. In a specific embodiment $f^{-1}()$ is defined as a 1 D LUT. In another specific embodiment, the function $f^{-1}()$ is defined as an inverse function of the Slog function, $f^{-1}(z)= exp((x-c)/a)-b$ where a, b and c are constant values. Advantageously, a = 0.44955114, b = 0.12123691, c = 0.94855684. In a specific embodiment, a is close to 0.45, i.e. $|a-0.45|<\varepsilon1$, b is close to 0.12, i.e. $|b-0.12|<\varepsilon2$, c is close to 0.95, i.e. $|c-0.95|<\varepsilon3$ where $\varepsilon1$, $\varepsilon2$ and $\varepsilon3$ are constant values, e.g. equal to $10^{-1}$ or $10^{-2}$. Other values may be used.

The inverse Slog function may also be defined in the form of a 1 D LUT.

In step 44, the mapped SDR luminance picture is multiplied by $Ba_c$. The obtained luminance picture is the HDR luminance picture.

In a context of decoding the value of $Ba_c$ and possibly $N(Ba_c)$ may be decoded from a bistream in addition to the luminance SDR picture. Chroma information may further be decoded in order to reconstruct a complete HDR picture.

**Figure 9** represents an exemplary architecture of a SDR to HDR mapping device 2 configured to map a SDR luminance picture in a HDR luminance picture according to an exemplary and non-limiting embodiment.

The mapping device 2 comprises one or more processor(s) 210, which could comprise, for example, a CPU, a GPU and/or a DSP (English acronym of Digital Signal Processor), along with internal memory 220 (e.g. RAM, ROM and/or EPROM). The mapping device 2 comprises one or more Input/Output interface(s) 230, each adapted to display output information and/or allow a user to enter commands and/or data (e.g. a keyboard, a mouse, a touchpad, a webcam); and a power source 240 which may be external to the mapping device 2. The mapping device 2 may also comprise one or more network interface(s) (not shown). The SDR luminance picture may be obtained from a source. According to different embodiments, the source can be, but not limited to:

- a local memory, e.g. a video memory, a RAM, a flash memory, a hard disk ;
- a storage interface, e.g. an interface with a mass storage, a ROM, an optical disc or a magnetic support;
- a communication interface, e.g. a wireline interface (for example a bus interface, a wide area network interface, a local area network interface) or a wireless interface (such as a IEEE 802.11 interface or a Bluetooth interface); and
- an picture capturing circuit (e.g. a sensor such as, for example, a CCD (or Charge-Coupled Device) or CMOS (or Complementary Metal-Oxide-Semiconductor)).

According to different embodiments, the HDR luminance picture may be sent to a destination, e.g. a HDR display device. As an example, the HDR luminance picture is stored in a remote or in a local memory, e.g. a video memory or a RAM, a hard disk. In a variant, the HDR luminance picture is sent to a storage interface, e.g. an interface with a mass storage, a ROM, a flash memory, an optical disc or a magnetic support and/or transmitted over a communication interface, e.g. an interface to a point to point link, a communication bus, a point to multipoint link or a broadcast network. According to an exemplary and non-limiting embodiment, the mapping device 2 further comprises a computer program stored in the memory 220. The computer program comprises instructions which, when executed by the mapping device 2, in particular by the processor 210, enable the mapping device 2 to execute the method described with reference to figure 6, 7 or 8. According to a variant, the computer program is stored externally to the mapping device 2 on a non-transitory digital data support, e.g. on an external storage medium such as a HDD, CD-ROM, DVD, a read-only and/or DVD drive and/or a DVD Read/Write drive, all known in the art. The mapping device 2 thus comprises a mechanism to read the computer program. Further, the mapping device 2 could access one or more Universal Serial Bus (USB)-type storage devices (e.g., "memory sticks.") through corresponding USB ports (not shown).

According to exemplary and non-limiting embodiments, the mapping device 2 can be, but not limited to:

- a mobile device ;
- a communication device ;
- a game device ;
- a set top box;
- a TV set;
- a tablet (or tablet computer) ;
- a laptop ;
- a display and
- a decoding chip.

The mapping device 2 is advantageously part of an encoder configured to decode a HDR picture in a bitstream.

## Encoder

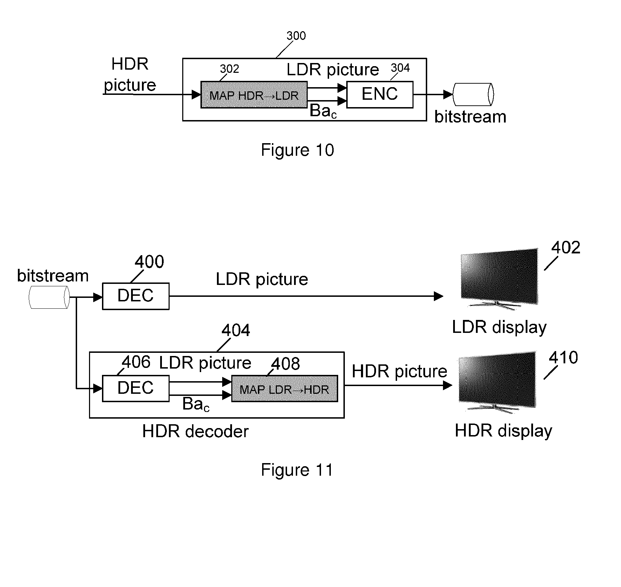

**Figure 10** represents an exemplary encoding device that implements one of the HDR to SDR mapping methods disclosed with respect to figures 2, 3 and 4.

The encoder 300 receives a HDR picture. The received HDR picture (luminance component and possibly chroma components) is mapped to a SDR picture by a mapping circuit 302 using a backlight value $Ba_c$ associated with the HDR picture. In particular, the mapping circuit 302 is configured to map the HDR luminance picture to a SDR luminance picture according to the mapping method disclosed with respect to figures 2, 3 or 4. The mapping circuit 302 is connected to an encoding circuit 304. The encoding circuit 304 is configured to encode the SDR picture and the backlight value $Ba_c$ in a bitstream. In a variant, the encoding circuit 304 is further configured to encode $N(Ba_c)$. For example, the encoding circuit is a HEVC main10 encoder. The value $Ba_c$ may be encoded by using a dedicated SEI message, or by putting its value in a header as a slice header. In a variant, the value $Ba_c$ may be encoded in a non-normative way, by hiding its value in coded data structure, for instance in the quad-tree data. Chroma information may be also encoded in the bitstream in order to encode a complete SDR picture. The bitstream may be sent to a destination, e.g. a remote decoding device. As an example, the bitstream is stored in a remote or in a local memory, e.g. a video memory or a RAM, a hard disk. In a variant, the bitstream is sent to a storage interface, e.g. an interface with a mass storage, a ROM, a flash memory, an optical disc or a magnetic support and/or transmitted over a communication interface, e.g. an interface to a point to point link, a communication bus, a point to multipoint link or a broadcast network.

In a specific embodiment, the encoder 300 comprises one or more processor(s), which could comprise, for example, a CPU, a GPU and/or a DSP (English acronym of Digital Signal Processor), along with internal memory (e.g. RAM, ROM and/or EPROM). The encoder 300 comprises one or more Input/Output interface(s), each adapted to display output information and/or allow a user to enter commands and/or data (e.g. a keyboard, a mouse, a touchpad, a webcam); and a power source which may be external to the encoder 300. The encoder 300 may also comprise one or more network interface(s) (not shown).

## Decoder

**Figure 11** represents an exemplary decoding device that implements one of the SDR to HDR mapping methods disclosed with respect to figures 6, 7 and 8.

The bitstream may then be received by a first decoder 400. The first decodeur 400 is configured to decode a SDR picture that may be directly displayed by a SDR display 402. In a variant, the bitstream is received by a second decoder 404. The received bitstream is decoded by a decoding circuit 406 into a SDR picture and a backlight value $Ba_c$. The value $N(Ba_c)$ is calculated from the decoded $Ba_c$. In a variant, the value $N(Ba_c)$ is decoded from the bitstream. The SDR picture comprises at least a luminance component (a SDR luminance picture) and possibly chroma components. The decoding circuit 406 is connected to a mapping circuit 408. The SDR luminance picture is mapped to a HDR luminance picture by the mapping circuit 406 using the decoded backlight value $Ba_c$ associated with the HDR picture. In particular, the mapping circuit 408 is configured to map the SDR luminance picture to a HDR luminance picture according to the mapping method disclosed with respect to figure 6, 7 or 8. For example, the decoding circuit 406 and the first decoder 400 are HEVC main10 decoders. Additional chroma information may be decoded in order to decode a complete HDR picture. The decoded HDR picture may be sent to a destination, e.g. a HDR display device 410. As an example, the bitstream is stored in a remote or in a local memory, e.g. a video memory or a RAM, a hard disk. In a variant, the bitstream is sent to a storage interface, e.g. an interface with a mass storage, a ROM, a flash memory, an optical disc or a magnetic support and/or transmitted over a communication interface, e.g. an interface to a point to point link, a communication bus, a point to multipoint link or a broadcast network.

In a specific embodiment, the second decoder 404 comprises one or more processor(s), which could comprise, for example, a CPU, a GPU and/or a DSP (English acronym of Digital Signal Processor), along with internal memory (e.g. RAM, ROM and/or EPROM). The second decoder 404 comprises one or more Input/Output interface(s), each adapted to display output information and/or allow a user to enter commands and/or data (e.g. a keyboard, a mouse, a touchpad, a webcam); and a power source which may be external to the second decoder 404. The second decoder 404 may also comprise one or more network interface(s) (not shown).

The implementations described herein may be implemented in, for example, a method or a process, an apparatus, a software program, a data stream, or a signal. Even if only discussed in the context of a single form of implementation (for example, discussed only as a method or a device), the implementation of features discussed may also be implemented in other forms (for example a program). An apparatus may be implemented in, for example, appropriate hardware, software, and firmware. The methods may be implemented in, for example, an apparatus such as, for example, a processor, which refers to processing devices in general, including, for example, a computer, a microprocessor, an integrated circuit, or a programmable logic device. Processors also include communication devices, such as, for example, computers, cell phones, portable/personal digital assistants ("PDAs"), and other devices that facilitate communication of information between end-users.

Implementations of the various processes and features described herein may be embodied in a variety of different equipment or applications, particularly, for example, equipment or applications. Examples of such equipment include an encoder, a decoder, a post-processor processing output from a decoder, a pre-processor providing input to an encoder, a video coder, a video decoder, a video codec, a web server, a set-top box, a laptop, a personal computer, a cell phone, a PDA, and other communication devices. As should be clear, the equipment may be mobile and even installed in a mobile vehicle.

Additionally, the methods may be implemented by instructions being performed by a processor, and such instructions (and/or data values produced by an implementation) may be stored on a processor-readable medium such as, for example, an integrated circuit, a software carrier or other storage device such as, for example, a hard disk, a compact diskette ("CD"), an optical disc (such as, for example, a DVD, often referred to as a digital versatile disc or a digital video disc), a random access memory ("RAM"), or a read-only memory ("ROM"). The instructions may form an application program tangibly embodied on a processor-readable medium. Instructions may be, for example, in hardware, firmware, software, or a combination. Instructions may be found in, for example, an operating system, a separate application, or a combination of the two. A processor may be characterized, therefore, as, for example, both a device configured to carry out a process and a device that includes a processor-readable medium (such as a storage device) having instructions for carrying out a process. Further, a processor-readable medium may store, in addition to or in lieu of instructions, data values produced by an implementation.

As will be evident to one of skill in the art, implementations may produce a variety of signals formatted to carry information that may be, for example, stored or transmitted. The information may include, for example, instructions for performing a method, or data produced by one of the described implementations. For example, a signal may be formatted to carry as data the rules for writing or reading the syntax of a described embodiment, or to carry as data the actual syntax-values written by a described embodiment. Such a signal may be formatted, for example, as an electromagnetic wave (for example, using a radio frequency portion of spectrum) or as a baseband signal. The formatting may include, for example, encoding a data stream and modulating a carrier with the encoded data stream. The information that the signal carries may be, for example, analog or digital information. The signal may be transmitted over a variety of different wired or wireless links, as is known. The signal may be stored on a processor-readable medium.

A number of implementations have been described. Nevertheless, it will be understood that various modifications may be made. For example, elements of different implementations may be combined, supplemented, modified, or removed to produce other implementations. Additionally, one of ordinary skill will understand that other structures and processes may be substituted for those disclosed and the resulting implementations will perform at least substantially the same function(s), in at least substantially the same way(s), to achieve at least substantially the same result(s) as the implementations disclosed. Accordingly, these and other implementations are contemplated by this application.

**Claims**

1. A method comprising mapping a high-dynamic range luminance picture to a standard-dynamic range luminance picture based on a backlight value $Ba_c$ associated with said high-dynamic range luminance picture.

2. The method of claim 1, wherein mapping the high-dynamic range luminance picture to a standard-dynamic range luminance picture based on a backlight value $Ba_c$ associated with said high-dynamic range luminance picture comprises determining (10) a mapping function from a set of at least two mapping functions based on said backlight value and mapping (12) the high-dynamic range luminance picture to a standard-dynamic range luminance picture using the determined mapping function, wherein each mapping function of said set is associated with a different backlight value.

3. The method of claim 2, wherein determining a mapping function from a set of at least two mapping functions based on said decoded backlight value comprises interpolating or extrapolating said mapping function from at least two mapping functions of said set of at least two mapping functions.

4. The method of claim 2 or 3, wherein each mapping function of the set is an increasing function in luminance and the set of mapping functions is a decreasing function of the backlight value for each luminance value.

5. The method according to any of claims 2 to 4, wherein each function $g(Ba_i, Y)$ of the set is defined as $f(Y/Ba_i)/N(Ba_i)$ where $N(Ba_i) = f(P_{HDR}/Ba_i)/M_{SDR}$ with $P_{HDR}$ being a high-dynamic range peak brightness and $M_{SDR}$ being a maximum codeword value of the standard-dynamic range luminance picture and where $f(z) = \exp \int \zeta(z)/z$ and $\zeta(z)$ is a decreasing function.

6. The method of claim 1, wherein mapping a high-dynamic range luminance picture to a standard-dynamic range luminance picture based on said backlight value $Ba_c$ comprises :

   - dividing the high-dynamic range luminance picture by $Ba_c$;
   - applying a mapping function f(.) on the divided high-dynamic range luminance picture;
   - dividing the mapped high-dynamic range luminance picture by $N(Ba_c)$; wherein $f(z) = \exp \int \zeta(z)/z$ and $\zeta(z)$ is a decreasing function and where $N(Ba_c) = f(P_{HDR}/Ba_c)/ M_{SDR}$ with $P_{HDR}$ being a high-dynamic range peak brightness and $M_{SDR}$ being a maximum codeword value of the standard-dynamic range luminance picture.

7. The method of claim 5 or 6, wherein f(z) is the function $a*\ln(b+z) + c$, with a, b and c are constant values such that $f(0)=0$.

8. The method of claim 7, wherein a is close to 0.45, b is close to 0.12, and c is close to 0.95.

9. A method comprising mapping a standard-dynamic range luminance picture to a high-dynamic range luminance picture based on a backlight value associated with said high-dynamic range luminance picture.

10. The method of claim 9, wherein mapping the standard-dynamic range luminance picture to a high-dynamic range luminance picture depending on said decoded backlight value comprises determining a mapping function from a set of at least two mapping functions based on said decoded backlight value and mapping the standard-dynamic range luminance picture to a high-dynamic range luminance picture using the determined mapping function, wherein each mapping function of said set is associated with a different backlight value.

11. The method of claim 10, wherein determining a mapping function from a set of at least two mapping functions based on said decoded backlight value comprises interpolating or extrapolating said mapping function from at least two mapping functions of said set of at least two mapping functions.

12. The method of claim 10 or 11, wherein each mapping function of the set is an increasing function in luminance and the set of mapping functions is an increasing function of the backlight value for each luminance value.

**13.** The method according to any of claims 10 to 12, wherein each function $g^{-1}(Ba_i, L)$ of the set is defined as $Ba_i * f^{-1}(L*N(Ba_i))$ where $N(Ba_i) = f(P_{HDR}/Ba_i)/ M_{SDR}$ with $P_{HDR}$ being a high-dynamic range peak brightness and $M_{SDR}$ being a maximum codeword value of the standard-dynamic range luminance picture and where $f(z) = \exp \int \zeta(z)/z$ and $\zeta(z)$ is a decreasing function.

**14.** The method of claim 9, wherein mapping a standard-dynamic range luminance picture to a high-dynamic range luminance picture based on said backlight value $Ba_c$ comprises :

- multiplying the standard-dynamic range luminance picture by $N(Ba_c)$;
- applying a mapping function $f^{-1}(.)$ on the multiplied standard-dynamic range luminance picture;
- multiplying the mapped standard-dynamic range luminance picture by the backlight value $Ba_c$;

where $f(z) = \exp \int \zeta(z)/z$ and $\zeta(z)$ is a decreasing function and where $N(Ba_c) = f(P_{HDR}/ Ba_c)/ M_{SDR}$ with $P_{HDR}$ being a high-dynamic range peak brightness and $M_{SDR}$ being a maximum codeword value of the standard-dynamic range picture.

**15.** The method of claim 13 or 14, wherein the function $f^{-1}(.)$ is the function $\exp((x-c)/a)-b$, with a, b and c are constant values such that $f^{-1}(0)=0$.

**16.** The method of claim 15, wherein a is close to 0.45, b is close to 0.12, and c is close to 0.95.

Figure 1

Figure 2

HDR luminance picture, S= $\{g(Ba_i,Y), i\epsilon\{1,\ldots,N\}\}$, $Ba_c$

identifying two mapping functions $g(Ba_m,Y)$ and $g(Ba_n,Y)$ in S so that $Ba_m < Ba_c < Ba_n$

interpolating a mapping function $g(Ba_c,Y)$ from the identified two mapping functions

mapping the HDR luminance picture to a SDR luminance picture using the interpolated mapping function $g(Ba_c,Y)$

SDR luminance picture

Figure 3

HDR luminance picture,
$Ba_c$, $1/N(Ba_c)$, $f()$

dividing the HDR luminance picture by $Ba_c$ — 20

mapping the HDR luminance picture divided by $Ba_c$ using the mapping function $f()$ — 22

dividing the mapped luminance picture by $N(Ba_c)$ — 24

SDR luminance picture

Figure 4

130
I / O
120
Memory
1
110
Processor
140
Power source

Figure 5

SDR luminance picture, $Ba_c$,
$S' = \{g^{-1}(Ba_1, L), g^{-1}(Ba_2, L)\}$

determining a mapping function from the set S' of at least two mapping functions based on the backlight value $Ba_c$ associated with the HDR picture — 30

mapping the SDR luminance picture to a HDR luminance picture using the determined mapping function — 32

HDR luminance picture

Figure 6

SDR luminance picture,
$S' = \{g^{-1}(Ba_i, L), i \in \{1, \dots, N\}\}$,
$Ba_c$

30
300
identifying two mapping functions $g^{-1}(Ba_m, L)$ and $g^{-1}(Ba_n, L)$ in S' so that $Ba_m < Ba_c < Ba_n$

302
interpolating a mapping function $g^{-1}(Ba_c, L)$ from the identified two mapping functions

32
mapping the SDR luminance picture to a HDR luminance picture using the interpolated mapping function $g^{-1}(Ba_c, L)$

HDR luminance picture

Figure 7

SDR luminance picture,
$Ba_c$, $N(Ba_c)$, $f^{-1}(.)$

multiplying the SDR luminance picture by $N(Ba_c)$ ⟋40

mapping the multiplied SDR luminance picture using the mapping function $f^{-1}(.)$ ⟋42

multiplying the mapped SDR luminance picture by $Ba_c$ ⟋44

HDR luminance picture

Figure 8

230
I / O

220
Memory

200

210
Processor

240
Power source

Figure 9

300

HDR
picture

302     LDR picture   304

MAP HDR→LDR     ENC

Ba$_c$

bitstream

Figure 10

402

bitstream   400

DEC     LDR picture

LDR display

404

406 LDR picture   408

DEC     MAP LDR→HDR    HDR picture

Ba$_c$

HDR decoder

410

HDR display

Figure 11

Europäisches
Patentamt

European
Patent Office

Office européen
des brevets

# EUROPEAN SEARCH REPORT

Application Number

EP 15 30 5113

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2010/166301 A1 (JEON SEUNG-HUN [KR]) 1 July 2010 (2010-07-01) * abstract * * figures 1,3 * * paragraphs [0002], [0005], [0037] - [0039] * * formulas 3 and 4 * | 1-4,9-12 | INV. G06T5/00 |
| X | US 2009/097777 A1 (CHEN SHING-CHIA [TW] ET AL) 16 April 2009 (2009-04-16) * abstract * * figure 1 * * paragraph [0018] - paragraph [0020] * | 1,9 | |
| X | REINHARD E ET AL: "Photographic tone reproduction for digital images", ACM TRANSACTIONS ON GRAPHICS (TOG), ACM, US, vol. 21, no. 3, 1 July 2002 (2002-07-01), pages 267-276, XP007904044, ISSN: 0730-0301, DOI: 10.1145/566570.566575 * abstract * * figure 6 * * section 3.1 * | 1,9 | |

-/--

TECHNICAL FIELDS
SEARCHED (IPC)

G06T

The present search report has been drawn up for all claims

| Place of search | Date of completion of the search | Examiner |
|---|---|---|
| Munich | 27 July 2015 | Scholz, Volker |

EPO FORM 1503 03.82 (P04C01)

Europäisches
Patentamt

European
Patent Office

Office européen
des brevets

# EUROPEAN SEARCH REPORT

Application Number

EP 15 30 5113

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | HORE ALAIN ET AL: "A statistical derivation of an automatic tone mapping algorithm for wide dynamic range display", 2014 IEEE INTERNATIONAL CONFERENCE ON ACOUSTICS, SPEECH AND SIGNAL PROCESSING (ICASSP), IEEE, 4 May 2014 (2014-05-04), pages 2475-2479, XP032617760, DOI: 10.1109/ICASSP.2014.6854045 [retrieved on 2014-07-11] * abstract * * figures 5,6 * * sections 2,3.1.2 * | 1,9 | |
| A | David Touzé ET AL: "HDR Video Coding based on Local LDR Quantization", HDRi2014 -Second International Conference and SME Workshop on HDR imaging, 4 March 2014 (2014-03-04), XP055112158, Retrieved from the Internet: URL:http://people.irisa.fr/Ronan.Boitard/articles/2014/HDR%20Video%20Coding%20based%20on%20Local%20LDR%20Quantization.pdf [retrieved on 2014-04-04] * abstract * * figure 4 * * table 1 * * starting from the paragraph preceding equation 5 to section 4 last paragraph.; page 4, right-hand column - page 5, left-hand column * | 5-8, 13-16 | |

TECHNICAL FIELDS
SEARCHED (IPC)

The present search report has been drawn up for all claims

| Place of search | Date of completion of the search | Examiner |
|---|---|---|
| Munich | 27 July 2015 | Scholz, Volker |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

&  : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 15 30 5113

This annex lists the patent family members relating to the patent documents cited in the above-mentioned European search report.
The members are as contained in the European Patent Office EDP file on
The European Patent Office is in no way liable for these particulars which are merely given for the purpose of information.

27-07-2015

| Patent document cited in search report | | Publication date | Patent family member(s) | | Publication date |
|---|---|---|---|---|---|
| US 2010166301 | A1 | 01-07-2010 | CN | 101854557 A | 06-10-2010 |
| | | | KR | 20100079546 A | 08-07-2010 |
| | | | TW | 201030669 A | 16-08-2010 |
| | | | US | 2010166301 A1 | 01-07-2010 |
| US 2009097777 | A1 | 16-04-2009 | CN | 101409769 A | 15-04-2009 |
| | | | TW | 200917838 A | 16-04-2009 |
| | | | US | 2009097777 A1 | 16-04-2009 |

EPO FORM P0459

For more details about this annex : see Official Journal of the European Patent Office, No. 12/82